(19) **Europäisches Patentamt**

**European Patent Office**

**Office européen des brevets**

(11) **EP 1 096 378 A2**

(12) **EUROPEAN PATENT APPLICATION**

(43) Date of publication:
02.05.2001 Bulletin 2001/18

(51) Int. Cl.[7]: **G06F 9/50**, G06F 15/80

(21) Application number: 00122268.6

(22) Date of filing: 19.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: **19.10.1999 JP 29743999**

(71) Applicant:
**KABUSHIKI KAISHA TOSHIBA**
**Kawasaki-shi, Kanagawa-ken 210-8572 (JP)**

(72) Inventors:
• **Watanabe, Yukio**
  **1-1 Shibaura 1-chome Minato-ku Tokyo 105 (JP)**
• **Yasukawa, Hideki**
  **1-1 Shibaura 1-chome Minato-ku Tokyo 105 (JP)**
• **Kunimatsu, Atsushi**
  **1-1 Shibaura 1-chome Minato-ku Tokyo 105 (JP)**

(74) Representative: **HOFFMANN - EITLE**
**Patent- und Rechtsanwälte**
**Arabellastrasse 4**
**81925 München (DE)**

(54) **Parallel computer having a hierarchy structure**

(57)    In a multiprocessor system of a hierarchy configuration as a parallel computer of a common-bus structure, a processing unit (120) in an intermediate stage has a processor (123) having a programmable function that is equal to a normal processor, an instruction memory (125), and a data memory (127). The processing unit (120) receives a status signal from a lower processor (143), and a DMA controller (151) having a memory for the transfer of large sized data performs compression, decompression, programmable load dispersion, and load dispersion according to the state of operation of each lower processor.

FIG.1

EP 1 096 378 A2

**Description**

CROSS-REFERENCE TO RELATED APPLICATION

This application is based upon and claims the benefit of priority from the prior Japanese Patent Application No.11-297439, filed October 19, 1999; the entire contents of which are incorporated herein by reference.

BACKGROUND OF THE INVENTION

1. Field of the Invention

The present invention relates to a parallel computer having a hierarchy structure, and more particularly, to a parallel computer that may be most applied to image processing that requires enormous amount of calculation, computer entertainments, and execution of scientific calculations.

2. Description of the Related Art

In conventional parallel computers, for instance, a conventional parallel computer having a common bus structure (or a common bus system), a plurality of processors implemented with a plurality of semiconductor chips are arranged through a common bus formed on a semiconductor substrate. In this configuration, in order to further reduce the traffic of the common bus, a cache memory is incorporated in each layer when the common bus is formed in a hierarchy structure.

In general, a multiprocessing computer system includes two or more processors that execute computing tasks. In this system, other processors execute other computing tasks that are independent from the above-dedicated computing task while one processor executes a dedicated computing task, or the multi-processing computer system divides a specified computing task into plural execution elements, and then the plurality of processors in the multi-processing computer system execute these plural elements in order to reduce the total execution time of the computing task. In general, the processor is a device to execute operands of more than one and to generate and outputs the execution result. That is, an arithmetic operation is performed according to instructions executed by the processor.

A general structure of an available multi-processing computer system has a symmetry multiprocessor (SMP) structure. In a typical example, the multiprocessing computer system of the SMP structure incorporates plural processors that are connected to a common bus through a cache hierarchy structure. In addition, a common memory that is used for the processors in this system is also connected to the common bus. An access to a specified memory location in the common memory is executed in a same time during access to other memories. Because each memory location in the common memory is accessed uniformly, the structure of the common memory is called to as a uniform memory architecture (UMA).

In many cases, the processors and an internal cache are incorporated in a computer system. In a SMP computer system, one or more cache memories are formed between a processor and a common bus in cache hierarchy. The computer system having the common bus structure operates based on a cache coherency in order to maintain the common memory model in which a specific address indicates a data item preciously at any time.

In general, when the result of arithmetic operation of data stored in a memory field corresponding to a specific memory address has been copied to a cache memory in a cache layer, the arithmetic operation is in a coherent state. For example, when a data item stored in a memory field addressed by a specific address is updated, the updated data item will be copied to the cache memory that has stored a previous data item. Or, the previous data item is nullified in a stage and the updated data item is transferred from the main memory in a following stage. In the common bus system, a snooping bus protocol is commonly used. Each coherent transaction that will be executed on the common bus is snooped (or detected) by comparison to the data item in the cache memory. When a copied data item that is affected by the execution of the above-coherent transaction is detected, the cache line belonging to the copied data item is updated according to the above-coherent transaction.

The common bus structure, however, has several drawbacks to limit the feature of the multi-processing computer system. That is, there is a peak bandwidth (namely, the number of bytes per second to be transferred on the bus) to be used in the bus. When additional processors are connected to the common bus, the bandwidth for transferring data and instruction to the additional processors is over this peak bandwidth. When the bandwidth of one processor to be used is over the available bus bandwidth, some processors enter a waiting state until the bus bandwidth may be available. This reduces the performance of the computer system. In general, the maximum number of the processors to be connected to the common bus is approximately 32. Plural processors are connected to the common bus, the capacity load of the bus is increased and the physical length of the common bus is also increased. When the capacity load and the length of the bus are increased, the delay of the signal transfer on the bus is also increased. The increasing of the delay of the signal transfer also causes the increasing of the execution time of a transaction. Accordingly, the plural processors are added into the common bus, the peak bandwidth of the bus is also decreased.

These drawbacks described above are more increased by increasing the performance of the processor and operation frequency.

The micro-architecture of processors improved for a high-frequency demand requires a higher bandwidth when compared with the bandwidth for processors in a previous generation even if a same number of processors is connected to a bus. Accordingly, the bus having the adequate bandwidth for a multiprocessing computer system in a previous generation can not satisfy the demand of a current computer system including processors of a high performance. Further, there is a drawback that it becomes difficult to make a programming model and to perform a debug the multi-processing systems other than the systems having the common bus structure.

There is therefore a requirement to have an architecture of a new multi-processing system that is capable of executing processors in parallel even if the performance of a microprocessor and a peripheral circuit is increased and also even if the number of processors to be connected to a bus is increased.

## SUMMARY OF THE INVENTION

Accordingly, an object of the present invention is, with due consideration to the drawbacks of the conventional technique, to provide a parallel computer having a hierarchy structure capable of executing in parallel high-speed processors of a desired number that have been made based on a leading edge technology.

In accordance with a preferred embodiment of the present invention, a parallel computer having a hierarchy structure comprises an upper processing unit for executing a parallel processing task in parallel, and a plurality of lower processing units connected to the upper processing unit through a connection line. In the parallel computer, the upper processing unit divides the parallel processing task to a plurality of subtasks, and assigns the plurality of subtasks to the corresponding lower processing units and transfers data to be required for executing the plurality of subtasks to the lower processing units. The lower processing units execute the corresponding subtasks from the upper processing unit, and inform the completion of the execution of the corresponding subtasks to the upper processing unit when the execution of the subtasks is completed, and the upper processing unit completes the parallel processing task when receiving the information of the completion of the execution from all of the lower processing units.

In accordance with a preferred embodiment of the present invention, a parallel computer having a hierarchy structure comprises an upper processing unit for executing a parallel processing task in parallel, a plurality of intermediate processing units connected to the upper processing unit through a first connection line, and a plurality of lower processing units connected to the intermediate processing units through a second connection line. In the parallel computer, the upper processing unit divides the parallel processing task to a plurality of first subtasks, and assigns the plurality of first subtasks to the corresponding intermediate processing units, and transfers data to be required for executing the plurality of first subtasks to the intermediate processing units. The intermediate processing units divide the first subtasks to a plurality of second subtasks, and assigns the plurality of second subtasks to the corresponding lower processing units, and transfers data to be required for executing the plurality of second subtasks to the lower processing units. The lower processing units execute the corresponding second subtasks, and inform the completion of the execution of the second subtasks to the corresponding intermediate processing units when the execution of all of the second subtasks is completed. The intermediate processing units inform the completion of the execution of the corresponding second subtasks to the upper processing units when the execution of all of the first subtasks is completed. The upper processing unit completes the parallel processing task when receiving the information of the completion of the execution from all of the intermediate processing units.

In the parallel computer described above, the lower processing units connected to the connection line are mounted on a smaller area when compared with the upper processing unit, and a signal line through which each lower processing unit is connected has a smaller wiring capacity, and an operation frequency for the lower processing units is higher than that for the upper processing unit.

In the parallel computer described above, the lower processing units connected to the second connection line are mounted on a smaller area when compared with the intermediate processing units connected to the first connection line, and a signal line through which each lower processing unit is connected has a smaller wiring capacity, and an operation frequency for the lower processing units is higher than that for the intermediate processing units.

In the parallel computer described above, each of the upper processing unit and the lower processing units has a processor and a memory connected to the processor.

In the parallel computer described above, each of the upper processing unit, the intermediate processing units, and the lower processing units has a processor and a memory connected to the processor.

In the parallel computer described above, the upper processing unit receives information regarding the completion of the subtask from each lower processing unit through a status signal line.

In the parallel computer described above, each intermediate processing unit and the upper processing unit receives information regarding the completion of the second subtask and the first subtask from each lower processing unit and each intermediate processing unit through a status signal line, respectively.

In the parallel computer described above, each lower processing unit comprises a processor, and a memory and a DMA controller connected to the processor.

In the parallel computer described above, each intermediate processing unit comprises a processor, and a memory and a DMA controller connected to the processor.

In the parallel computer described above, the processor and the DMA controller are connected in a coprocessor connection.

In the parallel computer described above, the upper processing unit compresses the data to be required for executing the subtasks, and then transfers the compressed data to the corresponding lower processing units.

In the parallel computer described above, the upper processing unit compresses the data to be required for executing the first subtasks, and then transfers the compressed data to the corresponding intermediate processing units.

In the parallel computer described above, each intermediate processing unit compresses the data to be required for executing the second subtasks, and then transfers the compressed data to the corresponding lower processing units.

In the parallel computer described above, each intermediate processing unit is a DMA transfer processing unit.

In the parallel computer described above, the DMA transfer processing unit is a programmable.

In the parallel computer described above, each lower processing unit is mounted with the upper processing unit as a multi-chip module on a board.

In the parallel computer described above, each intermediate processing unit and the corresponding lower processing units are mounted with the upper processing unit as a multi-chip module on a board.

In the parallel computer described above, each of the upper processing unit and the lower processing units is formed on an independent semiconductor chip, and each semiconductor chip is mounted as a single multi-chip module.

In the parallel computer described above, each of the intermediate processing units, the corresponding lower processing units, and the upper processing unit is formed on an independent semiconductor chip, and each semiconductor chip is mounted as a single multi-chip module.

In the parallel computer described above, a structure of each of the connection line, the first connection line, and the second connection line is a common bus connection.

In the parallel computer described above, a structure of each of the connection line, the first connection line, and the second connection line is a cross-bus connection.

In the parallel computer described above, a structure of each of the connection line, the first connection line, and the second connection line is a star connection.

In the preferred embodiment of the present invention, the processing unit in the intermediate stage of the multiprocessor system of a hierarchy structure comprises a processor having a same function of a normal processor, an instruction memory, and a data memory. The processing unit in the intermediate stage receives a status signal from the lower processing unit, and a DMA controller (as having a data transfer memory of a large size compresses received data and decompresses transfer data to be transferred, and performs a programmable load dispersion or a load dispersion according to the operating state.


BRIEF DESCRIPTION OF THE DRAWINGS

These and other objects, features, aspects and advantages of the present invention will become more apparent from the following detailed description of the present invention when taken in conjunction with the accompanying drawings, in which:

FIG.1 is a block diagram showing an overview of a multiprocessor system having a hierarchy bus structure according to a first embodiment as the parallel computer having a hierarchy structure of the present invention;
FIG.2 is a block diagram showing an arrangement of multi chip modules on a board on which the parallel computer shown in FIG.1 is mounted;
FIG.3 is a block diagram showing an overview of a multiprocessor system having a hierarchy bus structure as the parallel computer having a hierarchy structure according to a second embodiment of the present invention;
FIG. 4 is a block diagram showing a configuration of a multi chip module in which the parallel computer is implemented;
FIG.5 is a block diagram showing one configuration of an intermediate hierarchy unit;
FIG.6 is a diagram explaining a collision decision among objects shown in an image;

FIG.7 is a diagram explaining a collision decision among objects shown in an image;

FIG.8 is a diagram explaining a collision decision among objects shown in an image;

FIG.9 is a diagram showing the comparison in performance between multiprocessor systems of a hierarchy bus structure of both a prior art and the present invention; and

FIG.10A and FIG.10B are diagrams each showing a connection structure of the parallel computer having a hierarchy structure according to the present invention.

DESCRIPTION OF THE PREFERRED EMBODIMENTS

Other features of this invention will become apparent through the following description of preferred embodiments which are given for illustration of the invention and are not intended to be limiting thereof.

First embodiment

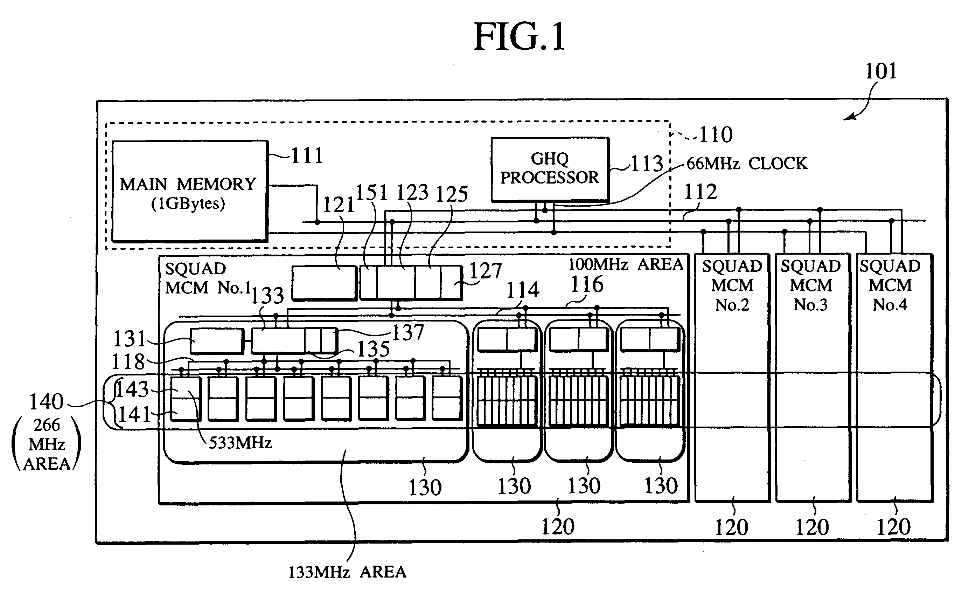

FIG.1 is a block diagram showing an overview of a multiprocessor system having a hierarchy bus structure according to a first embodiment as the parallel computer having a hierarchy structure of the present invention.

The multiprocessor system having a hierarchy bus structure shown in FIG.1 comprises a GHQ main memory of 1 Gbytes, a GHQ processor 113, and four SQUAD processing units 120 each of which incorporates a plurality of processors (that will be described later in detail). Each SQUAD processing unit 120 is implemented with a multi-chip module (MCM). The GHQ processor 113, the four SQUAD processing units 120, and the GHQ main memory 111 are connected through a first level bus 112.

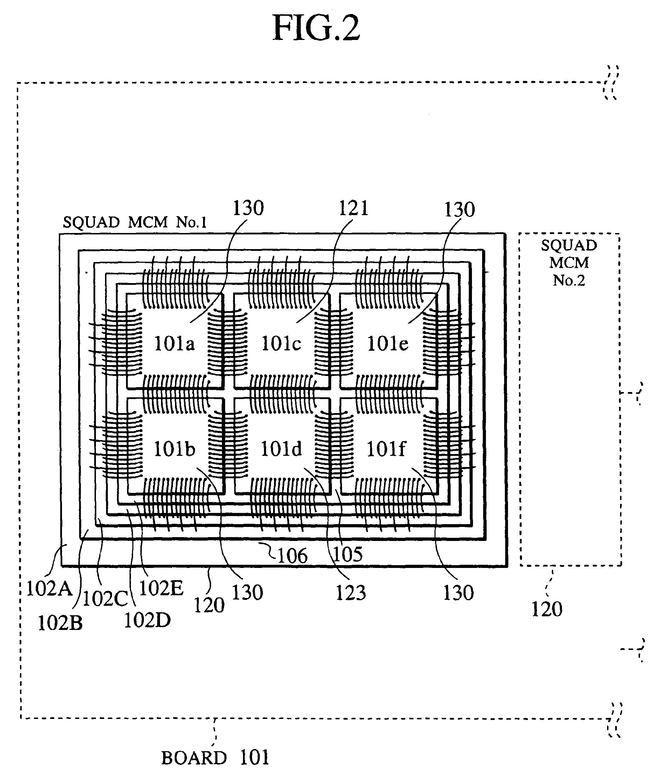

The six component units, namely, a memory module forming the GHQ main memory 111, the GHQ processor 113, and the four MCMs are connected to each other on a print wiring board 101. As shown in FIG.2, each of the four SQARD processing units 120 is mounted as the MCM on the pint wiring board 101.

FIG.2 is a block diagram showing an arrangement of MCMs on the print wiring board 101 on which the parallel computer having a hierarchy structure according to the first embodiment shown in FIG.1 is mounted. In general, the MCM is formed by a plurality of unpackaged semiconductor integrated circuits to be incorporated in a subsystem in a normal single semiconductor chip package.

One type of MCM comprises a substrate (or a board), a thin film connector structure, and a plurality of integrated circuits which are connected to the thin film connector structure and surrounded by an epoxy passivation material. The MCM structure gives to uses a feature to realize a higher frequency performance when compared with the print wiring board that is formed by a conventional plating through-hole and surface mounting technology. That is, as shown in FIG.2, it is possible to reduce both the wiring capacity and a transfer length by packaging the multichips 121, 123, and the four modules 130 into the multichip module MCM 120. In general, this configuration increases the performance of the computer system.

MCM requires a high-density structure of wiring in order to transfer signals among IC chips 101a to 101f mounted on a common substrate formed by the plural layers 102A to 102E. By the way, it is possible to use an optional number of the layers in order to adopt a dedicated fabrication technology and a wiring density to be required in design.

As shown in FIG.2, the IC chips 101c and 101d correspond to the DMA memory module 121 as one chip and the SQUAD processor 123, respectively. The IC chips 101a, 101b, 101e, and 101f correspond to the FLIGHT processing units 130, respectively. The common bus is formed on each of the plural layers 102A to 102E.

A multilevel ceramic substrate technology that has been described in the prior art document Japanese patent laid-open publication number JP-A-10/56036 is used for the configuration of the first embodiment shown in FIG. 1. It is, however, possible to use another optional technology in a same level.

In FIG.2. each of the layers 102A to 102E is formed by using an insulation ceramic material on which a patterned metalization layer has been formed. A part of each of the layers 102A to 102D has been eliminated, so that a multi-cavity structure is formed. A part of each of the patterned metalization layer is exposed around the multi-cavity portion.

The exposed part in the layer 102E forms a mounting section for chips. The exposed part is coated on a metalization ground surface on which the IC chips 101a to 101f are mounted by a chip mounting technology by using a conductive epoxy, a solder, or the like.

Each of the layers 102b to 102D has signal wirings through which digital data signals are transferred from the IC chips 101a to 101f to MCM input/output pins or terminals (not shown).

The layer 102A is capable of performing chemical, mechanical, and electric protection for lower layers that are formed in a lower section. In addition to the feature, a package cap is also mounted on the layer 102A.

Printing wirings, I/O pins, and terminals are formed on the layers 102B to 102D by using available MCM technology, so that the MCM 100 can be connected to outer circuits. In wire bonding, bonding pads at one edge of each of the IC chips 101a to 101f are connected to selected conductors or bonding pads of the layers 101B to 102D. The configuration described above can enlarge the bandwidth of the second level in a lower stage when compared with the bandwidth of the printing wiring board as the upper stage.

Similarly, a plurality of FIGHTER processing units are mounted in the FLIGHT processing unit 130 where the plural FIGHTER processing units are connected in a single silicon substrate that is higher in signal transfer when compared with the MCM structure. It is therefore possible to achieve a wider bandwidth.

Thus, the present invention has a feature to provide that the processing units in a lower stage are more integrated and may operate at a higher frequency.

The GHQ processing unit 110 at the uppermost stage monitors the entire operation of the parallel computer system. The GHQ processing unit 110 comprises the one chip GHQ processor 113 and the GHQ main memory 111. In the configuration shown in FIG. 1, the number of the stages is four, namely, the GHQ processing unit 110, the SQUAD processing units 120, the FLIGHT processing units 130, and the FIGHTER processing units 140. The GHQ processing unit 110 is directly connected to the four SQUAD processing units 120, each comprises the FLIGHT processing unit 130 and the FIGHTER processing unit 140. The GHQ processing unit 110, the SQUAD processing unit 120, and the GHQ main memory 111 are connected to each other through the first level bus 112 (as a common bus) of 32 bit width, and the entire bandwidth is 256 Mbytes/sec (frequency 66MHz).

The SQUARD commander processor 123 in each SQUAD processing unit 120 controls the entire operation of the unit 120. The SQUAD commander processor 123 is connected to the SQUAD instruction memory 125, the SQUAD data memory 127, and the SQUAD DMA memory 121. The SQUAD processing unit 120 is integrated on a single semiconductor chip, as shown in FIG.2.

The SQUAD commander processor 123 is directly connected to the four FLIGHT processing units 130 as the following stage. The four FLIGHT processing unit 130 controls the entire operation of the sixteen FIGHTER processing units 140.

The SQUAD commander processor 123 is connected to the FLIGHT processing unit 130 through the second level bus 114 of 64 bits/sec. Accordingly, the entire bandwidth becomes 800 Mbytes/sec (frequency 100MHz).

The FLIGHT commander processor 133 in each FLIGHT processing unit 130 controls the entire operation of each unit 130. The FLIGHT commander processor 133 is connected to the FLIGHT instruction memory 135, the FLIGHT data memory 137, and the FLIGHT DMA memory 131. The FLIGHT processing unit 130 is integrated on the single semiconductor chip of the SQUAD processing unit 120, as shown in FIG.2.

The FLIGHT commander processor 133 is directly connected to the sixteen FIGHTER processor 143 in the FIGHTER processing units 140 as the following stage, each of which includes a FIGHTER memory 141. The FLIGHT commander processor 133 in each FLIGHT processing unit 130 is connected to the FIGHTER processor 143 through the bus 118 of 128 bits/sec. Accordingly, the entire bandwidth becomes 2128 Mbytes/sec (frequency 133MHz). The operation frequency of the FIGHTER processor 143 is 533MHz.

The GHQ processing unit 110 divides a program (or a task) into a plurality of sub-programs (or into a plurality of subtasks) and sends the divided sub-programs to each of the SQUAD processing units 120. After the division process, the GHQ processing unit 110 compresses the sub-programs (or subtasks) and then the compressed them to the SQUAD processing unit 120. There are Run-length method or Huffman code method as the compression algorithm. The compression method is selected according to the characteristic of data to be compressed. If it is not necessary to use any data compression, the subtasks that have not been compressed are transferred to the SQUAD processing units 120.

In the parallel computer having a hierarchy structure according to the present invention, the task is divided into a plurality of subtasks, and if necessary, the compression for the subtasks that has been divided are executed, and then transferred to the following stage. Therefore the size of the subtask is more decreased at the processing unit in a lower stage, and the increasing of the bandwidth can be suppressed even if the operation frequency becomes high.

When receiving the task data (or compressed task data if necessary) from the GHQ processor 113 in the GHQ processing unit 110, the SQUAD commander processor 123 in the SQUAD processing unit 120 sends to the GHQ processing unit 110 the information that the status of the SQUAD processing unit 120 enters a busy state. Then, when the received task has been compressed, the SQUAD commander processor 123 decompresses the received task data.

On the contrary, the SQUAD commander processor 123 in the SQUAD processing unit 120 further divides the received task in order to assign the divided task (or the subtask) to each FLIGHT processing unit 130. After the completion of the division of the task to obtain the subtasks, the SQUAD processing unit 120 compresses the divided task and then transfers them to the FLIGHT processing units 130. If it is improperly or not necessary to divide the task, the task that has not been divided is transferred to the FLIGHT processing units 130. When receiving the task data from the SQUAD processing unit 120 (or compressed task data if necessary), the FLIGHT processing unit 130 sends to the SQUAD processing unit 120 the request to set the status of the FLIGHT processing unit 130 to the busy state. Then, when the received task has been compressed, the FLIGHT processing unit 130 decompresses the received task data.

The FLIGHT processing units 130 further divided the received task into a plurality of tasks and then transfers the divided task data item to each FIGHTER processing unit 140. Where, the task data means the content of the processing and necessary data. That is, the main function of both the QUAD processing unit 120 and the FLIGHT processing unit 130 as an intermediate node is a scheduling and data transfer. The FIGHTER processing units 140 at the lowermost stage performs the actual processing of the task. When receiving the task data, the FIGHTER processing units 140 sends to the FLIGHT processing unit 130 in the upper stage the request to set the status of the corresponding FIGHTER processing unit 140 to the busy state, and then the FIGHTER processing unit processes the received task data. After the completion of the process of the task data, the FIGHTER processing unit 140 transfers the operation result to the FLIGHTER commander processor 123 in the FLIGHTER processing unit 130, and then the status of the FIGHTER processing unit 140 is set to the idle state.

When detecting the FIGHTER processing unit 140 in the idle state, the FLIGHTER processing unit 130 assigns the task data that has not been processed to the FIGHTER processing unit 140 in the idle state. When all of the task data items divided by one FLIGHT processing unit 130 have been processed by the FIGHTER processing units 140, the FLIGHT processing unit 130 transfers the operation result to the SQUAD processing unit 120, and then this SQUAD processing unit 120 sets the status of the FLIGHT processing unit 130 from the busy state to the idle state.

Like the operation of the FLIGHT processing unit 130, when detecting the FLIGHT processing unit 130 in the idle state, the SQUAD processing unit 120 assigns un-processed task to this FLIGHT processing unit 130. Similarly, when receiving the operation results from all of the FLIGHT processing units 130 in the lower stage, the SQUAD processing unit 120 sends the operation result to the GHQ processing unit in the uppermost stage. Thereby, the GHQ processing unit 110 sets the idle state to the SQUAD processing unit 120.

That is, like the operation of the FLIGHT processing unit 130, when detecting the SQUAD processing unit in the idle state and when there is un-processed task, the GHQ processing unit 110 assigns the un-processed task to the SQUAD processing unit 120. When the SQUAD processing unit 120 completes the operation of all of the tasks from the GHQ processing unit 110, the operation of the given program is completed.

As described above, the FIGHTER processing units 140 in the lowermost stage, the FLIGHT processing units 130 and SQUAD processing units 120 in the intermediate stage, and the GHQ processing unit 110 in the uppermost stage perform different operation to each other.

That is, because each FIGHTER processing unit 140 performs the actual arithmetic operation, it is not necessary to have the function to perform complicated decisions and routines, but it is necessary to have a function of a high arithmetic calculation. Accordingly, it is preferable that each FIGHTER processor 143 has plural integer arithmetic units and floating-point arithmetic units. In this embodiment, for example, the FIGHTER processing unit 140 includes one integer arithmetic unit and two floating-point arithmetic units. In this embodiment, hazard processing circuits and interrupt circuits to increase high speed operation are omitted. Accordingly, when the operation frequency is 533 MHz, it is possible for the parallel computer having a hierarchy structure of this embodiment to perform the operation of 1.066GFLOPS.

On the other hand, the function of the SQUAD processing units 120 and the FLIGHT processing units 130 in the intermediate stage is a broker, namely, they control the data transfer between the upper stage (or the uppermost stage) to the lower stage (or the lowermost stage). Accordingly, it is adequate that each of the SQUAD commander processor 123 and the FLIGHT commander processor 133 incorporates an arithmetic unit of the smallest operation size. In this embodiment, each of the SQUAD commander processor 123 and the FLIGHT commander processor 133 incorporates one integer arithmetic unit.

Because the GHQ processing unit 110 executes a main program, a general-purpose processor is used as the GHQ commander processor 113. Accordingly, it is possible to use a microprocessor of a high performance for the GHQ commander processor 113.

The configuration of the first embodiment of the present invention is realized based on the following technical idea.

The six components, the memory module forming the GHQ main memory 111, the GHQ processor 113, and the four multi-chip modules 120 are synchronization with the clock of 66MHz. In this stage, the frequency of this synchronous clock is suppressed to a relatively low value because it is necessary to synchronize the six components in a wide area.

Next, each SQUAD processing unit 120 receives the synchronous clock of 66MHz from the GHQ processing unit 110, and a Phase Locked Loop (PLL) (not shown) generates the synchronous clock of 100MHz that is 1.5 times of the synchronous clock of 66MHz. This synchronous clock of 100MHz is used as a synchronous clock in each SQUAD processing unit 120. The four FLIGHT processing units 130, the SQUAD commander processor 123, the SQUAD instruction memory 125, the SQUAD data memory 127, and the SQUAD DMA memory 121 operate in synchronization with this synchronous clock of 100MHz. One region in the SQUAD processing unit 120 is integrated to a part of the area of the GHQ processing unit 110, so that a signal transfer length and a signal skew may be decreased, and it is possible to operate at a high frequency.

Next, each FLIGHT processing unit 130 receives the synchronous clock of 100MHz from the SQUAD processing unit 120, and a PLL (not shown) or another circuit generates the synchronous clock of 133MHz that is approximately 1.5 times of the synchronous clock of 100MHz. This synchronous clock of 133MHz is used as a synchronous clock in each FLIGHT processing unit 130. The sixteen FIGHTER processing units 140, the FLIGHT commander processor 133, the FLIGHT instruction memory 135, the FLIGHT data memory 137, and the FLIGHT DMA memory 131 operate in synchronization with this synchronous clock of 133MHz. One region in the FLIGHT processing unit 130 is integrated to a part of the area of the SQUAD processing unit 120, so that it is possible to operate at a higher frequency.

Furthermore, each FIGHTER processing unit 140 receives the synchronous clock of 133MHz from the FIGHTER processing unit 130, and a PLL (not shown) or another circuit generates the synchronous clock of 266MHz that is approximately 2 times of the synchronous clock of 133MHz. This synchronous clock of 266MHz is used as a synchronous clock in each FIGHTER processing unit 140. Then, a PLL (not shown) or another circuit generates the synchronous clock of 533MHz that is approximately 2 times of the synchronous clock of 266MHz. This synchronous clock of 533MHz is used as an operation clock only for each FLIGHT commander processor 133. The FLIGHT commander processor 133 and the FIGHTR memory 141 operate in synchronization with this synchronous clock of 266MHz. One region in the FIGHTER processing unit 140 is integrated to a part of the area of the FLIGHT processing unit 130, so that it is possible to reduce both a signal transfer length and a signal skew, and also possible to operate at a high frequency.

Next, a description will be given of the configuration of the intermediate stage, namely, the configuration of the SQUAD processing unit 120 and the FLIGHT processing unit 130, in the parallel computer according to the present invention.

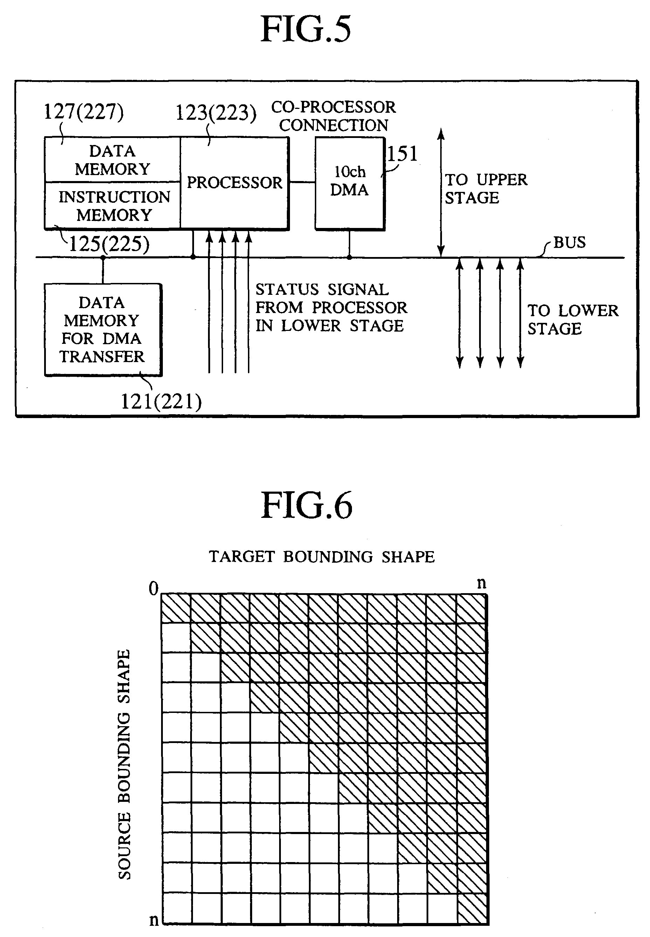

FIG.5 is a block diagram showing one example of the configuration of the intermediate hierarchy unit such as the SQUAD processing unit 130 and the FLIGHT processing unit 130.

In the configuration of the intermediate stage shown in FIG.5, the general-purpose processor as the GHQ commander processor 123 is connected to a Direct Memory Access (DMA) controller 151 of 10 channels. Because this DMA controller 151 and the general-purpose processor 123 are in a coprocessor connection, it is possible to use an available DMA controller.

The DMA controller 151 is connected to a bus through which a memory 121 of a large memory size (as the SQUAD DMA memory), a connection line to the upper stage, and a connection line to the lower stage are connected. A processor core in the general-purpose processor 123 has signal lines through which a status signal from each processor in the lower stage is transferred. For example, one SQUAD processing unit 120 receives status signals through four status signal lines connected to the four FLIGHT processing units 130 in the lower stage. Each status signal line is one bit or more. The status signal indicates whether the processor in the lower stage is in the busy state or the idle state.

The SQUAD commander processor 123 is connected to the SQUAD instruction memory 125 and the SQUAD data memory 127 in which programs and data to be used for the SQUAD commander processor 123 are stored. These programs expands (or unwinds) data transferred from the upper stage if necessary, analyses commands also transferred from the upper stage, and performs required processes. Then, these programs assign tasks and perform scheduling, and finally transfer the data to be processed to the lower stage.

As one concrete example, first, the data to be processed that are assigned to the target processing unit are transferred to the DMA transfer memory. Second, the data are transferred to the processing unit in the lower stage that is capable of processing the data. This algorism may be implemented by the program that has been stored in the SQUAD data memory 127. In other words, the processing unit in the intermediate stage fulfills the function as an intelligent DMA system in the entire parallel computer of the present invention.

In a case of a system only for a specialized process, that is not necessary to apply a versatile purpose, for example a graphic simulator and the like, it is possible to implement the processors other than the GHQ commander processor 113 by using non-Neumann type DMA processor including the DMA controller that is implemented by the hardware.

Next, a description will be given of the memory structure used in the first embodiment.

The easiest implementation of the memory structure is that each of the full processors in the parallel computer has a local memory space. Because each processor has a corresponding local memory space, it is not necessary to prepare any snoop-bus protocol and any coherent transaction. In this case, the memory space for the GHQ processor 113 is mapped only in the GHQ main memory 111. The memory space of the SQUAD commander processor 123 is mapped in the SQUAD DMA memory 121 with the SQUAD instruction memory 125 and the SQUAD data memory 127.

The memory space for the GHQ processor 113 and the memory space of the SQUAD commander processor 123 are independently to each other. Furthermore, each of the different SQUAD commander processors 123 is independently to each other.

Similarly, the memory space of the FLIGHT commander processor 133 is mapped in the FLIGHT DMA memory 131 with the FLIGHT instruction memory 135 and the FLIGHT data memory 137. The memory space of the FLIGHT commander processor 133 is independently from the memory spaces of both the GHQ processor 113 and the SQUAD commander processor 133. Moreover, each of the FLIGHT commander processors 133 is independently to each other.

Similarly, the memory space of each FIGHTER processor 143 is mapped in the corresponding FIGHTER memory 141 of 64Kbytes. The memory space of the FIGHTER processor 143 is independently from the memory space for the GHQ processor 113, the memory space of each of the SQUAD commander processor 123. Furthermore, each of the FIGHTER processors 143 is independently to each other.

It is also possible to divide the memory space of the GHQ processor 113 into a plurality of memory spaces in order to map the divided memory spaces for the full processors in the parallel computer according to the first embodiment. In this configuration, a move instruction in the GHQ memory 111 is used for the data transfer between the upper stage and the lower stage.

The move instruction for the memory may be implemented as a DMA command to be used between the upper stage and the lower stage. In this case, there is a method to share the same address by both the actual memory of the SQUAD processing unit 120 and the actual memory of the GHQ processing unit 110. However, since the program executed by the GHQ processor 113 controls completely the execution state of the full processing units, it is not necessary to prepare any snoop-bus protocol and any coherent transaction. Similarly, the actual memory of the FLIGHT processing units 130 and the SQUAD processing units 120 share the same address. In addition, both the actual memory of the FIGHTER processing units 140 and the actual memory of the FLIGHT processing units 130 share the same address.

By the way, the multiprocessor system of a hierarchy bus structure according to the first embodiment shown in FIG.1 has the configuration in which the four semiconductor chips as the four SQUAD MCMs 120, the GHQ processor 113 (not shown in FIG.2), and the main memory 111 (not shown in FIG.2) are mounted on the single board 101.

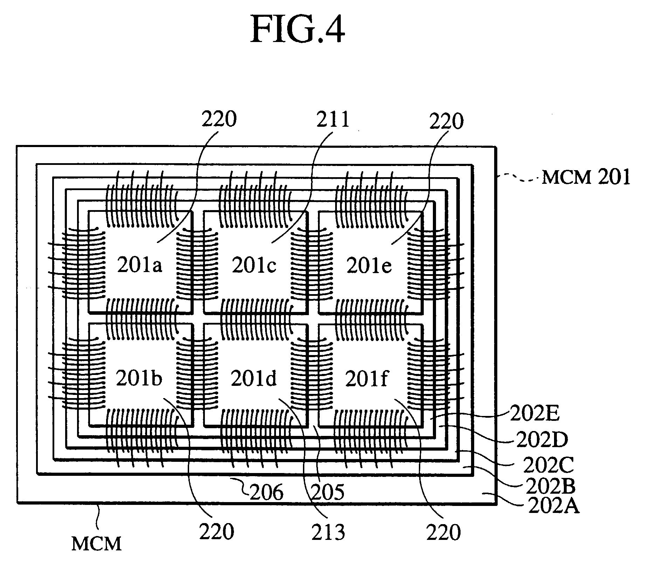

On the contrary, the multiprocessor system of a hierarchy bus structure according to the second embodiment shown in FIG.4 has the configuration in which four SQUAD chips 220, a GHQ processor 213, and a main memory 211 are incorporated in a single semiconductor chip as a multi-chip module (MCM). The configuration and the operation of the second embodiment will be explained later in detail.

Second embodiment

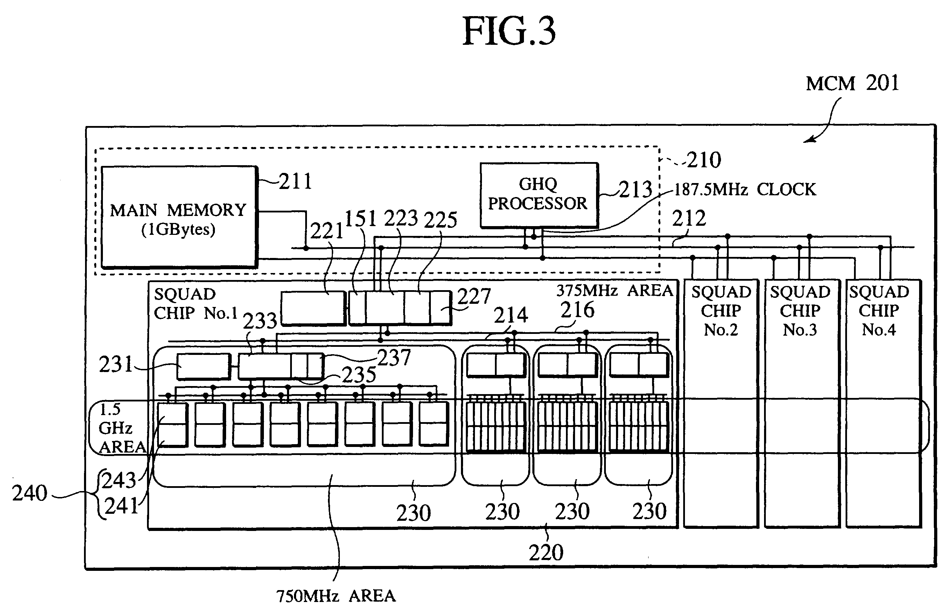

FIG.3 is a block diagram showing an overview of a multiprocessor system having a hierarchy bus structure as the parallel computer having a hierarchy structure according to the second embodiment of the present invention.

The multiprocessor system of a hierarchy bus structure shown in FIG.3 comprises a GHQ main memory of 1 Gbytes formed on a single semiconductor chip, a GHQ processor 213 formed on a single semiconductor chip, and four SQUAD processing units 220 each of which incorporates a plurality of processors (that will be described in detail). Each SQUAD processing unit 220 is formed on a single semiconductor chip.

The GHQ processor 213, the four SQUAD processing units 220, and the GHQ main memory 211 are connected through a first level bus 212.

The six component units, namely, a memory module forming the GHQ main memory 211, the GHQ processor 213, and the four SQUAD processing units 220 are mounted on a single multichip module (MCM). In general, the MCM is formed by a plurality of unpackaged semiconductor integrated circuits that are incorporated as sub systems in a package of a normal single semiconductor chip. One type of the MCM comprises a substrate (or a board), a thin film connector structure of a desired circuit structure, and a plurality of integrated circuits connected to the thin film connector structure and surrounded by an epoxy passivation material. The MCM structure gives to users a feature to realize a higher frequency performance when compared with the print wiring board that is formed by a conventional plating through-hole and surface mounting technology. That is, as shown in FIG.4, it is possible to reduce both the wiring capacity and a transfer length by packaging the multichips on the substrate. In general, this configuration increases the performance of the computer system.

FIG.4 is a block diagram showing a configuration of the multi-chip module in which the parallel computer according to the second embodiment is mounted.

MCM requires a high-density structure of wiring in order to transfer signals among IC chips 201a to 201f mounted on a common substrate formed by the plural layers 202A to 202E. By the way, it is possible to use an optional number of the layers for the adapting of a dedicated fabrication technology and a wiring density to be required for design.

As shown in FIG.4, the IC chips 201c and 201d correspond to the GHQ main memory module 211 and the GHQ processor 213, respectively. The IC chips 201a, 201b, 201e, and 201f correspond to the SQUAD processing units 220, respectively. This configuration of the second embodiment shown in FIG.4 is different from that of the first embodiment shown in FIG.2.

As shown in FIG. 4, the wiring as a first level bus is formed on each of the plural layers 202A to 202E.

In the configuration of the first embodiment shown in FIGs.1 and 2, the multilevel ceramic substrate technology that has been described in the prior art document Japanese patent laid-open publication number JP-A-10/56036 is used. It is, possible to use the same technology for the second embodiment.

In the case of the first embodiment shown in FIG.2, each of the layers 102A to 102E is formed by using an insulation ceramic material on which a patterned metalization layer has been formed.

In the configuration of the second embodiment shown in FIG. 4, a part of each of the layers 202A to 202D has been eliminated, so that a multi-cavity structure is formed. A part of each of the patterned metalization layer in each of the layers 202B to 202E is exposed around the multi-cavity portion.

The exposed part in the layer 202E forms a mounting section for chips. The exposed part is coated on a metalization ground surface on which the IC chip 201a to 201f are mounted by a chip mounting technology such as a conductive epoxy, a solder, or the like.

Each of the layers 202B to 202D has signal wirings through which digital data signals are transferred from the IC chips 201a to 201f to MCM input/output pins or terminals (not shown).

The layer 202A is capable of performing chemical, mechanical, and electric protection for lower layers that are formed in a lower section. In addition to the feature, a package cap is also mounted on the layer 102A.

Printing wirings, I/O pins, and terminals are formed on the layers 202B to 202D by using available MCM technology, so that the MCM 201 can be connected to outer circuits. In wire bonding, bonding pads at one edge of each of the IC chips 201a to 201f are connected to selected conductors or bonding pads of the layers 201B to 202D.

The configuration described above can enlarge the bandwidth of the first level when compared with the bandwidth of the printing wiring board. Similarly, a plurality of FLIGHT processing units 230 are mounted in the SQUAD processing unit 220 where they are connected on a single silicon substrate that has an advantage to operate at a high speed, it is thereby possible to achieve a wider bandwidth when compared with the MCM structure.

Thus, the present invention has a feature to provide that the processing units in a lower stage are more integrated and may have a higher operation frequency.

The GHQ processing unit 210 at the uppermost stage monitors the entire operation of the parallel computer system. The GHQ processing unit 210 comprises the one chip GHQ processor 213 and the GHQ main memory 211. In the configuration shown in FIG. 4, the number of the stages is four, namely, the GHQ processing unit 210, the SQUAD processing units 220, the FLIGHT processing unit 230, and the FIGHTER processing units 240.

The GHQ processing unit 210 is directly connected to the four SQUAD processing units 220, the FLIGHT processing units 230, the FIGHTER processing units 240 as a lower stage.

The GHQ processing unit 210 and the SQUAD processing units 220, and the GHQ main memory 211 are connected to each other through the ten RAM buses, so that the entire bandwidth becomes 16Gbytes/sec (frequency 400MHz×2).

The six component elements, the memory module forming the GHQ main memory 211 and the GHQ processor 213 and the four multi-chip modules 220 are synchronized with the synchronous clock of 187.5MHz. Accordingly, each SQUAD processing unit 220 inputs the synchronous clock of 187.5MHz from the GHQ processing unit 210.

The SQUARD commander processor 223 in each SQUAD processing unit 220 controls the entire operation of the unit 220. The SQUAD commander processor 223 is connected to the SQUAD instruction memory 225, the SQUAD data memory 227, and the SQUAD DMA memory 221. The SQUAD processing unit 220 is integrated on a single semiconductor chip, as shown in FIG.4.

The SQUAD commander processor 223 is directly connected to the four FLIGHT processing units 230 as the following stage. The four FLIGHT processing unit 230 controls the entire operation of the sixteen FIGHTER processing units 240.

The SQUAD commander processor 223 is connected to the FLIGHT processing unit 230 through the bus of 6,144 bit-width. Accordingly, the entire bandwidth becomes 388Gbytes/sec (frequency 375MHz).

The four FLIGHT processing units 230, the SQUAD commander processor 223, the SQUAD instruction memory 225, the SQUAD data memory 227, and the SQUAD DMA memory 221 operate in synchronization with the synchronous clock of 375MHz. Accordingly, each FLIGHT processing unit 230inputs the synchronous clock of 375MHz from the corresponding SQUAD processing unit 220.

The FLIGHT commander processor 233 in each FLIGHT processing unit 230 controls the entire operation of each unit 230. The FLIGHT commander processor 233 is connected to the FLIGHT instruction memory 235, the FLIGHT data memory 237, and the FLIGHT DMA memory 231. The FLIGHT processing unit 230 is integrated on the single semiconductor chip of the SQUAD processing unit 220, as shown in FIG.4.

The FLIGHT commander processor 233 is directly connected to the sixteen FIGHTER processing units 240 each comprising the FIGHTER processing units 243 and the FIGHTER memory of 64kbytes.

The sixteen FIGHTER processors 243, the FLIGHT commander processor 233, the FLIGHT instruction memory 235, the FLIGHT data memory 237, and the FLIGHT DMA memory 231 are synchronized by the synchronous clock of 750MHz. Accordingly, each FIGHTER processing unit 240 inputs the synchronous clock of 750MHz from the corresponding FLIGHT processing unit 230.

The FLIGHT processing unit 230 and the FIGHTER processor 243 are connected to each other through the bus of 1028 bit-width. Accordingly, the entire bandwidth becomes 99Gbytes/sec (frequency 750MHz). The operation frequency of the FIGHTER processor 243 is 1.5GHz.

The GHQ processing unit 210 divides a program (or a task) into a plurality of subprograms (or a plurality of subtasks) and sends the divided sub-programs to each of the SQUAD processing units 220. After the division process of the program or the task, the GHQ processing unit 110 compresses the sub-programs (or subtasks) and then transfers the compressed them to the SQUAD processing unit 120. There are Run-length method or Huffman code method as the compression algorithm. The compression method is selected according to the characteristic of data to be compressed. If it is not necessary to use any data compression, the subtasks are transferred to the SQUAD processing units 120 without any compression.

In the parallel computer having a hierarchy structure according to the present invention, the task is divided into a plurality of subtasks, and if necessary, the compression for the subtasks that has been divided are executed, and then transferred to the following stage. Therefore the size of the subtask is more decreased at the processing unit in a lower stage, and the increasing of the bandwidth can be suppressed even if the operation frequency becomes high.

When receiving the task data (or compressed task data if necessary) from the GHQ processor 213 in the GHQ processing unit 210, the SQUAD commander processor 223 in the SQUAD processing unit 220 sends to the GHQ processing unit 210 the information that the status of the SQUAD processing unit 220 enters a busy state. Then, when the received task has been compressed, the SQUAD commander processor 223 decompresses the received task data.

On the contrary, the SQUAD commander processor 223 in the SQUAD processing unit 220 further divides the received task data in order to assign the divided task to each FLIGHT processing unit 230. After the division process of the task, the SQUAD processing unit 220 compresses the divided task and then transfers the compressed tasks to the FLIGHT processing units 230. If it is improperly or not necessary to divide the task, the task that has not been divided is transferred to the FLIGHT processing units 230. When receiving the task from the SQUAD processing unit 220 (or compressed task data if necessary), the FLIGHT processing unit 230 sends to the SQUAD processing unit 220 the request to set the status of the FLIGHT processing unit 230 to the busy state.

Then, when the received task has been compressed, the FLIGHT processing unit 230 decompresses the received task data.

The FLIGHT processing units 230 further divide the received task into a plurality of tasks and then transfers the divided task data to each FIGHTER processing unit 240. Where, the task data means the content of the processing and necessary data. That is, the main function of both the QUAD processing unit 220 and the FLIGHT processing unit 230 as an intermediate node is a scheduling and data transfer. The FIGHTER processing units 240 at the lowermost stage performs the actual processing of the task. When receiving the task data, the FIGHTER processing units 240 sends to the FLIGHT processing unit 230 at the upper stage the request to set the state of the corresponding FIGHTER processing unit 240 to the busy state, and then the FIGHTER processing unit 240 processes the received task data. After the completion of the process of the task data, the FIGHTER processing unit 240 transfers the operation result to the FLIGHTER commander processor 223 in the FLIGHTER processing unit 230, and then the status of the FIGHTER processing unit 240 is set to the idle state.

When detecting the FIGHTER processing unit 240 in the idle state, the FLIGHTER processing unit 230 assigns the task data that has not been processed to this FIGHTER processing unit 240 in the idle state.

When all of the task data items divided by one FLIGHT processing unit 230 have been processed by the FIGHTER processing units 240, the FLIGHT processing unit 230 transfers the operation result to the SQUAD processing unit 220, and then this SQUAD processing unit 220 sets the status of the FLIGHT processing unit 230 from the busy state to the idle state.

Like the operation of the FLIGHT processing unit 230, when detecting the FLIGHT processing unit 230 in the idle state, the SQUAD processing unit 220 assigns un-processed task to this FLIGHT processing unit 130.

Similarly, when receiving the operation results from all of the FLIGHT processing units 230 at the lower stage, the SQUAD processing unit 220 sends the operation result to the GHQ processing unit 210 in the uppermost stage. Thereby, the GHQ processing unit 210 sets the idle state to the SQUAD processing unit 220.

That is, like the operation of the FLIGHT processing unit 230, when detecting the SQUAD processing unit 220 in the idle state and when there is un-processed task that is not processed, the GHQ processing unit 210 assigns the un-processed task to the SQUAD processing unit 220. When the SQUAD processing unit 220 completes the operation of all of the tasks from the GHQ processing unit 210, the operation of the given program is completed.

As described above, the FIGHTER processing units 240 as the lowermost stage, the SQUAD processing units 220 and the FLIGHT processing units 230 in the intermediate stage, and the GHQ processing unit 210 in the uppermost stage performs different operation to each other.

That is, because each FIGHTER processing unit 240 performs the actual arithmetic operation, it is not necessary to have the function to perform complicated decisions and routines, but it is necessary to have a function of a high arithmetic calculation. Accordingly, it is preferable that each FIGHTER processor 243 has plural integer arithmetic units and floating-point arithmetic units. In this embodiment, for example, the FIGHTER processing unit 240 includes one integer arithmetic unit and two floating-point arithmetic units, and hazard processing circuits and interrupt circuits to increase operations at high speed are omitted. Accordingly, when the operation frequency is 1.5GHz, it is possible for the parallel computer having a hierarchy structure of this embodiment to perform the operation of 24GFLOPS.

On the other hand, the function of the SQUAD processing units 220 and the FLIGHT processing units 230 in the intermediate stage is a broker, namely, they control the data transfer between the upper stage (or the uppermost stage) to the lower stage (or the lowermost stage). Accordingly, it is adequate that each of the SQUAD commander processor 223 and the FLIGHT commander processor 233 incorporates an arithmetic unit of the smallest operation size. In this embodiment, each of the SQUAD commander processor 223 and the FLIGHT commander processor 233 incorporates one integer arithmetic unit.

Because the GHQ processing unit 210 executes a main program, a general-purpose processor is used as the GHQ commander processor 213. It is therefore possible to use a microprocessor of a high performance as the GHQ commander processor 213.

Accordingly, the configuration of the second embodiment of the present invention is realized based on the following technical idea.

The six components, the memory module forming the GHQ main memory 211, the GHQ processor 213, and the four multi-chip modules 220 are synchronization with the synchronous clock of 187.5MHz. In this stage, the frequency of this synchronous clock is suppressed to a relatively low value because it is necessary to synchronize the six components placed in a wide area. By the way, the GHQ main memory 211 operates based on the clock of 400MHz that is used for asynchronous data transfer, not for synchronous data transfer.

Next, each SQUAD processing unit 220 receives the synchronous clock of 187.5MHz from the GHQ processing unit 210, and a Phase Locked Loop (PLL) (not shown) generates the synchronous clock of 375MHz that is 2 times of the synchronous clock of 187.5MHz. This synchronous clock of 375MHz is used as a synchronous clock in each SQUAD processing unit 220. The four FLIGHT processing units 230, the SQUAD commander processor 223, the SQUAD instruction memory 225, the SQUAD data memory 227, and the SQUAD DMA memory 221 operate in synchronization with this synchronous clock of 375MHz.

One region in the SQUAD processing unit 220 is integrated to a part of the area of the GHQ processing unit 210, so that it is possible to decrease both a signal transfer length and a signal skew, and also possible to operate at a high frequency.

Next, each FLIGHT processing unit 230 receives the synchronous clock of 375MHz from the SQUAD processing unit 220, and a PLL (not shown) or another circuit generates the synchronous clock of 750MHz that is approximately 2 times of the synchronous clock of 375MHz. This synchronous clock of 750MHz is used as a synchronous clock in each FLIGHT processing unit 230. The sixteen FIGHTER processing units 240, the FLIGHT commander processor 233, the FLIGHT instruction memory 235, the FLIGHT data memory 237, and the FLIGHT DMA memory 231 operate in synchronization with this synchronous clock of 750MHz.

One region in the FLIGHT processing unit 230 is integrated to a part of the area of the SQUAD processing unit 120, so that it is possible to operate at a higher frequency.

Furthermore, each FIGHTER processing unit 240 receives the synchronous clock of 750MHz from the FIGHTER processing unit 230, and a PLL (not shown) or another circuit generates the synchronous clock of 1.5GHz that is approximately 2 times of the synchronous clock of 750MHz. This synchronous clock of 1.5GHz is used as a synchronous clock in each FIGHTER processing unit 240. Each FLIGHT commander processor 233 and the FIGHTER memory 241 operate in synchronization with this synchronous clock of 1.5GHz. The FIGHTER processing unit 240 is integrated into a small region, so that it is possible to reduce a signal transfer length and a signal skew as small as possible, and it is thereby possible to operate at a high frequency.

Although the internal processes in the FLIGHT processing unit 230 operate based on the synchronous clock of 755MHz, it is difficult for the entire of the GHQ processing unit 210 to operate with the clock of 755MHz. Accordingly, the different FLIGHT processing units 230 can not operate synchronously. However, there is no problem if the SQUAD processing units in the upper stage may operate synchronously.

Next, a description will be given of the configuration of the intermediate stage, namely, the configuration of the SQUAD processing unit 220 and the FLIGHT processing unit 230, in the parallel computer of the present invention.

As shown in FIG.5 that has been used in the explanation of the first embodiment, FIG.5 shows the configuration of one unit in the intermediate stage.

In the configuration of the intermediate stage shown in FIG.5, the general-purpose processor as the GHQ commander processor 223 is connected to a Direct Memory Access (DMA) controller 151 of 10 channels. Because this DMA controller 151 and the general-purpose processor 223 are in a coprocessor connection, it is possible to use an available DMA controller.

The DMA controller 151 is connected to a bus through which a memory 221 of a large memory size (as the SQUAD DMA memory), a connection line to the upper stage, and a connection line to the lower stage are connected. A processor core in the processor 223 has signal lines through which a status signal from each processor in the lower stage is transferred. For example, one SQUAD processing unit 220 receives status signals through four status signal lines connected to the four FLIGHT processing units 230 in the lower stage.

Each status signal line is one bit or more. The status signal indicates whether the processor in the lower stage is in the busy state or the idle state.

The SQUAD commander processor 223 is connected to the SQUAD instruction memory 225 and the SQUAD data memory 227 in which programs and data to be used for the SQUAD commander processor 223 are stored. These programs expands (or unwinds) data transferred from the upper stage if necessary, analyses commands also transferred from the upper stage, and performs required processes. Then, these programs assign tasks and perform scheduling, and finally transfer the data to be processed to the lower stage.

As one concrete example, first, the data, to be processed, that are assigned to the target processing unit are transferred to the DMA transfer memory. Second, the data are transferred to the processing unit in the lower stage that is capable of processing the data. This algorism may be implemented by the program that has been stored in the SQUAD data memory 227.

In other words, the processing unit in the intermediate stage fulfills the function as an intelligent DMA system in the entire parallel computer of the present invention.

In a case of a system only for a specialized process, that is not necessary to apply a versatile purpose, for example a graphic simulator and the like, it is possible to implement the processors other than the GHQ commander processor 113 by using non-Neumann type DMA processor including the DMA controller that is implemented by the hardware.

Next, a description will be given of the memory structure used in the first embodiment.

The easiest implementation of the memory structure is that each of the full processors in the parallel computer has a local memory space. Because each processor has a corresponding local memory space, it is not necessary to prepare any snoop-bus protocol and any coherent transaction. In this case, the memory space for the GHQ processor 213 is mapped only in the GHQ main memory 211. The memory space of the SQUAD commander processor 223 is mapped in the SQUAD DMA memory 221 with the SQUAD instruction memory 225 and the SQUAD data memory 227.

The memory space for the GHQ processor 213 and the memory space of the SQUAD commander processor 223 are independently to each other. Furthermore, each of the different SQUAD commander processors 223 is independently to each other.

Similarly, the memory space of the FLIGHT commander processor 233 is mapped in the FLIGHT DMA memory 231 with the FLIGHT instruction memory 235 and the FLIGHT data memory 237. The memory space of the FLIGHT commander processor 233 is independently from the memory spaces of both the GHQ processor 213 and the SQUAD commander processor 233. Moreover, each of the FLIGHT commander processors 233 is independently to each other.

Similarly, the memory space of each FIGHTER processor 243 is mapped in the corresponding FIGHTER memory 241 of 64Kbytes. The memory space of the FIGHTER processor 243 is independently from the memory space for the GHQ processor 213, the memory space of each of the SQUAD commander processor 223. Furthermore, each of the FIGHTER processors 243 is independently to each other.

It is also possible to divide the memory space of the GHQ processor 213 into a plurality of memory spaces in order to map the divided memory spaces for the full processors in the parallel computer according to the second embodiment. In this configuration, a move instruction in the GHQ memory 211 is used for the data transfer between the upper stage and the lower stage.

The move instruction for the memory may be implemented as a DMA command to be used between the upper stage and the lower stage. In this case, there is a method to share the same address by both the actual memory of the SQUAD processing unit 220 and the actual memory of the GHQ processing unit 210. However, since the program executed by the GHQ processor 213 controls completely the execution state of the full processing units, it is not necessary to prepare any snoop-bus protocol and any coherent transaction. Similarly, the actual memory of the FLIGHT processing units 230 and the SQUAD processing units 220 share the same address. In addition, both the actual memory of the FIGHTER processing units 240 and the actual memory of the FLIGHT processing units 230 share the same address.

By the way, although the preferred first and second embodiments described above have shown the multiprocessor system of a hierarchy bus structure, as shown in FIGS.1 to 4, the present invention is not limited by these configurations.

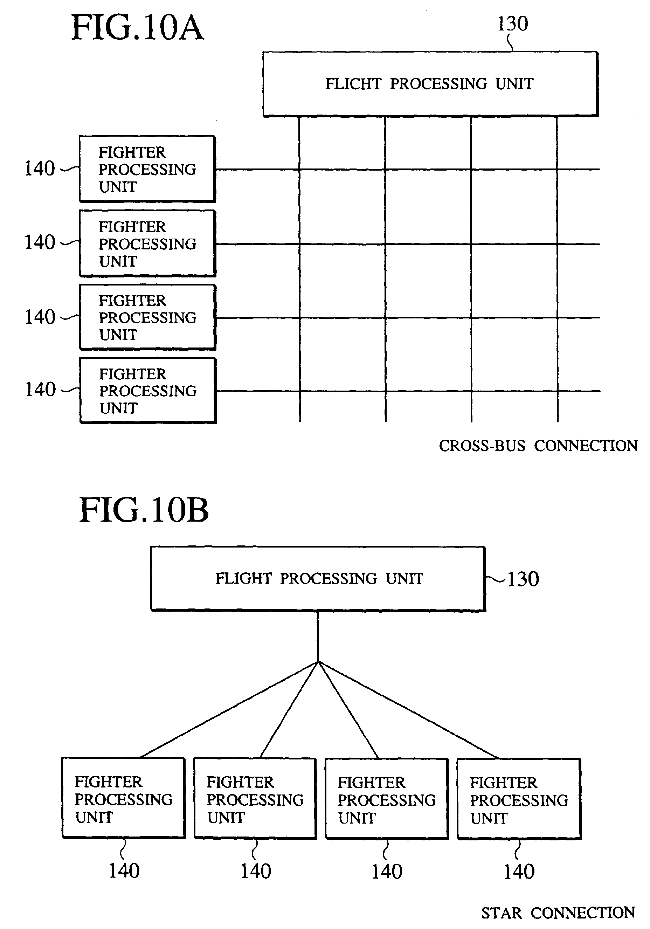

FIG.10A and FIG.10B are diagrams each showing a connection structure of processing units in the parallel computer having a hierarchy structure according to the present invention. For example, as shown in both the FIG. 10A and FIG.10B, it is possible to apply the concept of the present invention to various connection configurations, namely, it is possible to form the connection among the FLIGHT processing unit 130 and the corresponding FIGHTER processing units 140 in the parallel computer of the present invention based on a cross-bus connection (shown in FIG.10A), a star connection (shown in FIG.10B), or other connections.

〔Difference in performance between the present invention and prior art〕

Next, a description will be given of the explanation of the difference in performance between the multiprocessor system having a hierarchy bus structure of the present invention and that of the prior art.

First, in the multiprocessor system of a hierarchy bus structure of the second embodiment shown in FIG.3 in which each stage has only a cache, the estimation of the data transfer amount in a collision decision application is as follows:

In the consideration to perform the collision decision between objects shown in image, each object is divided into regions, each is called to as a bounding shape. Each collision decision is performed for all of the combination of the bounding shapes. When the bounding shape is a sphere shape, the collision decision between one bounding shape and another bounding shape can be expressed by following calculation:

$$(x_1 - x_2)^2 + (y_1 - y_2)^2 + (z_1 - z_2)^2 < (r_1 - r_2)^2.$$

The content of amount of the calculation is as follows:

(1) Load for eight elements $x_1$, $y_1$, $z_1$, $r_1$, $x_2$, $y_2$, $z_2$, and $r_2 \times 4$ bytes = 32 bytes ;
(2) Six addition/subtractions;
(3) Four multiplications; and
(4) One comparison.

Accordingly, the total requires the calculation of 8 loads and 11FP.

In the system including the FIGHTER processor at the lowermost stage having the calculation ability of 2FLs×1.5GHz = 3GFLOPS, each FIGHTER processor has a collision decision ability of 3GFLOPS/11FP = 275 MHz times/sec.

This FIGHTER processor consumes data of 3GFLOPS/11FP×32bytes = 8.75 Gbytes/sec.

When the system has 128 processors × 2FP×1.5GHz=384GFLOPS, the collision decision ability becomes 384GFLOPS/11FP = 34.9G times/sec.

In 1/60second, it becomes 384GFLOPS/11FP/60 = 580M times/frame.

This equals to $\sqrt{(2 \times 580M)}$ = 34.134MHz and means the ability to perform the collision decision between bounding shapes over 30,000 per 1/60 sec. The bandwidth to be necessary for this ability is:

FLIGHT bus : 8.75Gbytres/sec × 8 = 70Gbytes/sec; and
SQUAD bus : 70Gbytes/sec × 4 = 280Gbytes/sec.

Next, a description will be given of the case of the data expansion and the uniform load dispersion by using the processor in the intermediate node.

As shown in FIG.6, for example, the GHQ processing unit in the uppermost stage divides tasks of the source side and the target side into subgroups (for example, 10 subgroups), and then the processors process the divided subgroups per m×m. The subgroups are dispersed by the DMA to the processors in the idle state. That is, the tasks are processes in the load dispersion while checking which processor is in the idle state. Thereby, even if one processor detects the collision so that the processing time becomes long, the entire processors can disperse the tasks.

For example, when it is necessary to perform the collision decisions for 100,000 bounding shapes, the 1/4 data for the total collision decisions are dispersed to each of the four SQUAD commander processors.

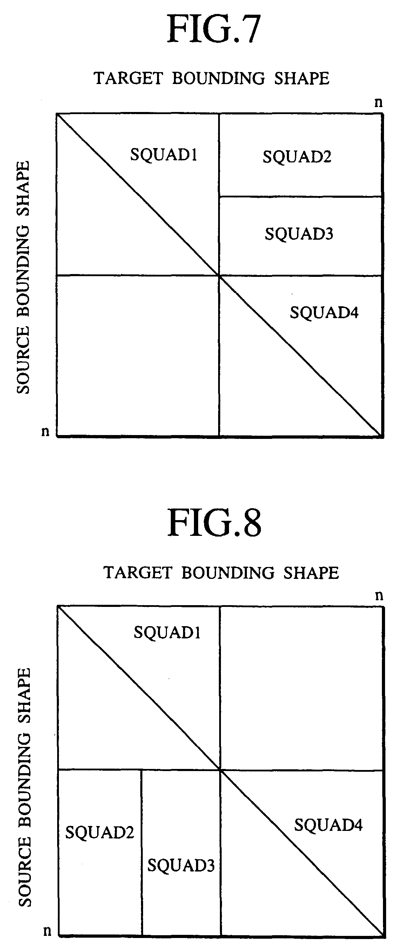

As one example, as shown in FIG.7, the SQUAD 1 as the SQUAD commander processor handles 1 to n/2 bounding shapes, the SQUAD 2 as the SQUAD commander processor handles 1 to n/4 and (n/2)+1 to n bounding shapes, the SQUAD 3 as the SQUAD commander processor handles the (n/4)+1 to n/2 and (n/2)+1 to n bounding shapes, and the SQUAD 4 as the SQUAD commander processor handles (n/2)+1 to n bounding shapes. The GHQ processor 213 in the GHQ processing unit 110 performs these load dispersion and the DMA transfer.

Of course, as shown in FIG.8, it is equivalent that the SQUAD 1 handles 1 to n/2 bounding shapes, the SQUAD 2 handles (n/2)+1 to 3n/4 and 1 to (n/2) bounding shapes, the SQUAD 3 handles the (3n/4)+1 to n and 1 to n/2 bounding shapes, and the SQUAD 4 handles (n/2)+1 to n bounding shapes.

Next, each SQUAD processing unit in the intermediate stage disperses the tasks by the same manner described above.

The SQUAD commander processor handles the load dispersion and the DMA transfer. For example, as shown in the configurations of FIG.1 and FIG.3, the SQUAD 2 (as the SQUAD processing unit) disperses the load into the FLIGHT 1 to FLIGHT 4 (as the FLIGHT processing units). In this case, there is no difference of the dispersion efficiency when compared with that of the GHQ processing unit. Because there are the sixteen FLIGHT processing units in the system, 1/16 collision decisions in the total collision decisions to be processes are assigned to each FLIGHT processing unit when the total number of the collision decisions are equally divided by 16. The maximum data amount tos be stored in each FLIGHT processing unit is approximately (1/4+1/8=) 3/8 of the total amount of data.

Each FLIGHT commander processor further divides the received data into small- sized regions based on the sub-group method described above. The amount of the division is determined based on the received data amount.

The group of the divided collision decisions is assigned to each FLIGHT commander processor in order to execute the collision decision operation. Each FLIGHT commander processor executes a flat decision for the collision.

The amount of this data transfer will be estimated in an optimized case, when the GHQ bus transfers 1.6 Mbytes data to the four SQUAD processing units and updates the data per 1/60 seconds, the speed of the data transfer becomes:

1.6Mbytes×4 (SQUAD processing units) ÷ 1/60 seconds = 384 Mbytes/sec.

Because SQUAD bus transfers approximately 580Kbytes (578904 bytes) to the four FLIGHT processing units, the required data bus bandwidth becomes:

580 Kbytes×4 (FLIGHT processing units) ÷ 1/60 seconds = 139.2 Mbytes/sec.

On the other hand, the data bandwidth required for the FLIGHT bus becomes:

1110/(1/60seconds) × 16Kbytes = approximately 1Gbytes/sec.

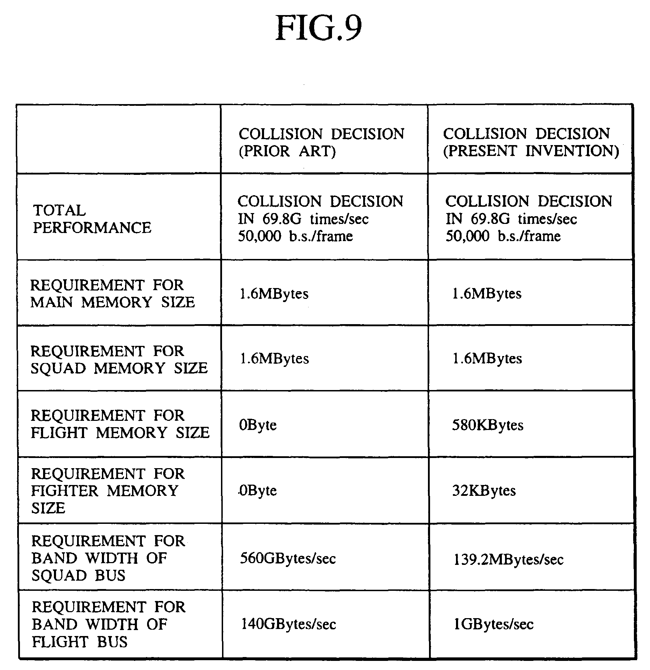

This value is approximately 1/140 of the 140 Gbytes/sec of the prior art. FIG.9 is a diagram showing a comparison in operation between multiprocessor systems of a hierarchy bus structure of both a prior art and the present invention. That is, FIG.9 shows the estimation results described above.

Accordingly, the hierarchy of the units in the multiprocessor system of a hierarchy bus structure of the present invention can suppress a clock skew and execute high speed processors of desired numbers in front end technology in parallel.

While the above provides a full and complete disclosure of the preferred embodiments 1 and 2 for the parallel computer having a hierarchy structure according to the present invention, various modifications, alternate constructions and equivalents may be employed without departing from the scope of the invention by a person with ordinary skill in the art to which the present invention pertains. Therefore the above description and illustration should not be construed as limiting the scope of the invention, which is defined by the appended claims.

**Claims**

**1.** A parallel computer having a hierarchy structure comprising:

an upper processing unit for executing a parallel processing task in parallel; and
a plurality of lower processing units connected to the upper processing unit through a connection line,
wherein the upper processing unit divides the parallel processing task to a plurality of subtasks, and assigns the plurality of subtasks to the corresponding lower processing units and transfers data to be required for executing the plurality of subtasks to the lower processing units, and
the lower processing units execute the corresponding subtasks from the upper processing unit, and inform the completion of the execution of the corresponding subtasks to the upper processing unit when the execution of the subtasks is completed, and
the upper processing unit completes the parallel processing task when receiving the information of the completion of the execution from all of the lower processing units.

**2.** A parallel computer having a hierarchy structure comprising:

an upper processing unit for executing a parallel processing task in parallel;
a plurality of intermediate processing units connected to the upper processing unit through a first connection line; and
a plurality of lower processing units connected to the intermediate processing units through a second connection line,

wherein the upper processing unit divides the parallel processing task to a plurality of first subtasks, and assigns the plurality of first subtasks to the corresponding intermediate processing units, and transfers data to be required for executing the plurality of first subtasks to the intermediate processing units, and

the intermediate processing units divide the first subtasks to a plurality of second subtasks, and assigns the plurality of second subtasks to the corresponding lower processing units, and transfers data to be required for executing the plurality of second subtasks to the lower processing units, and

the lower processing units execute the corresponding second subtasks, and inform the completion of the execution of the second subtasks to the corresponding intermediate processing units when the execution of all of the second subtasks is completed, and

the intermediate processing units inform the completion of the execution of the corresponding second subtasks to the upper processing units when the execution of all of the first subtasks is completed, and

the upper processing unit completes the parallel processing task when receiving the information of the completion of the execution from all of the intermediate processing units.

3. A parallel computer having a hierarchy structure according to claim 1, wherein the lower processing units connected to the connection line are mounted on a smaller area when compared with the upper processing unit, and a signal line through which each lower processing unit is connected has a smaller wiring capacity, and an operation frequency for the lower processing units is higher than that for the upper processing unit.

4. A parallel computer having a hierarchy structure according to claim 2, wherein the lower processing units connected to the second connection line are mounted on a smaller area when compared with the intermediate processing units connected to the first connection line, and a signal line through which each lower processing unit is connected has a smaller wiring capacity, and an operation frequency for the lower processing units is higher than that for the intermediate processing units.

5. A parallel computer having a hierarchy structure according to claim 3, wherein each of the upper processing unit and the lower processing units has a processor and a memory connected to the processor.

6. A parallel computer having a hierarchy structure according to claim 4, wherein each of the upper processing unit, the intermediate processing units, and the lower processing units has a processor and a memory connected to the processor.

7. A parallel computer having a hierarchy structure according to claim 3, wherein the upper processing unit receives information regarding the completion of the subtask from each lower processing unit through a status signal line.

8. A parallel computer having a hierarchy structure according to claim 4, wherein each intermediate processing unit and the upper processing unit receives information regarding the completion of the second subtask and the first subtask from each lower processing unit and each intermediate processing unit through a status signal line, respectively.

9. A parallel computer having a hierarchy structure according to claim 3, wherein each lower processing unit comprises a processor, and a memory and a DMA controller connected to the processor.

10. A parallel computer having a hierarchy structure according to claim 4, wherein each intermediate processing unit comprises a processor, and a memory and a DMA controller connected to the processor.

11. A parallel computer having a hierarchy structure according to claim 9, wherein the processor and the DMA controller are connected in a coprocessor connection.

12. A parallel computer having a hierarchy structure according to claim 10, wherein the processor and the DMA controller are connected in a coprocessor connection.

13. A parallel computer having a hierarchy structure according to claim 3, wherein the upper processing unit compresses the data to be required for executing the subtasks, and then transfers the compressed data to the corresponding lower processing units.

14. A parallel computer having a hierarchy structure according to claim 4, wherein the upper processing unit compresses the data to be required for executing the first subtasks, and then transfers the compressed data to the corresponding intermediate processing units.

**15.** A parallel computer having a hierarchy structure according to claim 5, wherein each intermediate processing unit compresses the data to be required for executing the second subtasks, and then transfers the compressed data to the corresponding lower processing units.

**16.** A parallel computer having a hierarchy structure according to claim 4, wherein each intermediate processing unit is a DMA transfer processing unit.

**17.** A parallel computer having a hierarchy structure according to claim 16, wherein the DMA transfer processing unit is a programmable.

**18.** A parallel computer having a hierarchy structure according to claim 1, wherein each lower processing unit is mounted with the upper processing unit as a multi-chip module on a board.

**19.** A parallel computer having a hierarchy structure according to claim 2, wherein each intermediate processing unit and the corresponding lower processing units are mounted with the upper processing unit as a multi-chip module on a board.

**20.** A parallel computer having a hierarchy structure according to claim 1, wherein each of the upper processing unit and the lower processing units is formed on an independent semiconductor chip, and each semiconductor chip is mounted as a single multi-chip module.

**21.** A parallel computer having a hierarchy structure according to claim 2, wherein each of the intermediate processing units, the corresponding lower processing units, and the upper processing unit is formed on an independent semiconductor chip, and each semiconductor chip is mounted as a single multi-chip module.

**22.** A parallel computer having a hierarchy structure according to claim 1, wherein a structure of the connection line is a common bus connection.

**23.** A parallel computer having a hierarchy structure according to claim 2, wherein a structure of each of the first connection line and the second connection line is a common bus connection.

**24.** A parallel computer having a hierarchy structure according to claim 1, wherein a structure of the connection line is a cross-bus connection.

**25.** A parallel computer having a hierarchy structure according to claim 2, wherein a structure of each of the first connection line and the second connection line is a cross-bus connection.

**26.** A parallel computer having a hierarchy structure according to claim 1, wherein a structure of the connection line is a star connection.

**27.** A parallel computer having a hierarchy structure according to claim 2, wherein a structure of each of the first connection line and the second connection line is a star connection.

# FIG.1

SQUAD MCM No.1

MAIN MEMORY (1GBytes) — 111

GHQ PROCESSOR — 113

66MHz CLOCK

101

110

112

121 151 123 125

127

100MHz AREA

114  116

SQUAD MCM No.2

SQUAD MCM No.3

SQUAD MCM No.4

133

131

118

137

135

140
(266 MHz AREA)

143

141

533MHz

130  130  130  130

120  120  120  120

133MHz AREA

EP 1 096 378 A2

# FIG.2

BOARD 101

# FIG.3

MCM 201

MAIN MEMORY (1GBytes) — 211

GHQ PROCESSOR — 213 -- 210

187.5MHz CLOCK

221 151 223 225

212

SQUAD CHIP No.1 233

227

375MHz AREA

214 216

SQUAD CHIP No.2

SQUAD CHIP No.3

SQUAD CHIP No.4

231

237

235

1.5 GHz AREA

240

243
241

230 230 230 230

220

750MHz AREA

EP 1 096 378 A2

# FIG.4

# FIG.5

127(227)    123(223)    CO-PROCESSOR
                        CONNECTION

| DATA MEMORY | | |
| INSTRUCTION MEMORY | PROCESSOR | 10ch DMA  151 |

TO UPPER STAGE

125(225)

BUS

DATA MEMORY FOR DMA TRANSFER

STATUS SIGNAL FROM PROCESSOR IN LOWER STAGE

TO LOWER STAGE

121(221)

# FIG.6

TARGET BOUNDING SHAPE

SOURCE BOUNDING SHAPE

# FIG.7

TARGET BOUNDING SHAPE

SOURCE BOUNDING SHAPE

SQUAD1

SQUAD2

SQUAD3

SQUAD4

# FIG.8

TARGET BOUNDING SHAPE

SOURCE BOUNDING SHAPE

SQUAD1

SQUAD2

SQUAD3

SQUAD4

# FIG.9

| | COLLISION DECISION (PRIOR ART) | COLLISION DECISION (PRESENT INVENTION) |
|---|---|---|
| TOTAL PERFORMANCE | COLLISION DECISION IN 69.8G times/sec 50,000 b.s./frame | COLLISION DECISION IN 69.8G times/sec 50,000 b.s./frame |
| REQUIREMENT FOR MAIN MEMORY SIZE | 1.6MBytes | 1.6MBytes |
| REQUIREMENT FOR SQUAD MEMORY SIZE | 1.6MBytes | 1.6MBytes |
| REQUIREMENT FOR FLIGHT MEMORY SIZE | 0Byte | 580KBytes |
| REQUIREMENT FOR FIGHTER MEMORY SIZE | 0Byte | 32KBytes |
| REQUIREMENT FOR BAND WIDTH OF SQUAD BUS | 560GBytes/sec | 139.2MBytes/sec |
| REQUIREMENT FOR BAND WIDTH OF FLIGHT BUS | 140GBytes/sec | 1GBytes/sec |

# FIG.10A

130

FLICHT PROCESSING UNIT

140 — FIGHTER PROCESSING UNIT

140 — FIGHTER PROCESSING UNIT

140 — FIGHTER PROCESSING UNIT

140 — FIGHTER PROCESSING UNIT

CROSS-BUS CONNECTION

# FIG.10B

FLIGHT PROCESSING UNIT  ～130

FIGHTER PROCESSING UNIT

FIGHTER PROCESSING UNIT

FIGHTER PROCESSING UNIT

FIGHTER PROCESSING UNIT

140    140    140    140

STAR CONNECTION